# EUROPEAN PATENT SPECIFICATION

(11) **EP 2 749 803 B1**
(45) Date of publication and mention of the grant of the patent: **23.03.2016**
(21) Application number: 12882885.2
(22) Date of filing: 11.12.2012
(51) Int. Cl.: F16L 21/03, F16L 21/08

(54) **BELL AND SPIGOT TYPE PIPING JOINT**
STECKZAPFEN-ROHRVERBINDUNG
JOINT DE CANALISATION DU TYPE À EMBOÎTEMENT

(30) Priority: 21.09.2012 CN 201210356608
(43) Date of publication of application: 02.07.2014
(73) Proprietor: Xinxing Ductile Iron Pipes Co., Ltd, Wuan, Hebei 056300 (CN)
(72) Inventor: ZHANG, Tongbo, Wuan Hebei 056300 (CN); LI, Jun, Wuan Hebei 056300 (CN); XU, Jun, Wuan Hebei 056300 (CN); LIU, Junfeng, Wuan Hebei 056300 (CN); DONG, Jianzhong, Wuan Hebei 056300 (CN); ZHAO, Fuen, Wuan Hebei 056300 (CN); LIU, Zhili, Wuan Hebei 056300 (CN); WANG, Yunfeng, Wuan Hebei 056300 (CN); KONG, Guobin, Wuan Hebei 056300 (CN); JIA, Qingbo, Wuan Hebei 056300 (CN)
(74) Representative: Gulde & Partner
(86) International application number: PCT/CN2012/086359
(87) International publication number: WO 2014/044002

(56) References cited:
- EP-A2- 0 794 378
- EP-A2- 2 090 815
- CN-A- 101 506 567
- CN-A- 101 718 377
- CN-A- 101 718 377
- CN-A- 102 297 297
- CN-U- 202 914 936
- US-A- 4 606 559

## Description

### Field of the Invention

The present invention relates to a spigot-and-socket conduit joint, especially to a spigot-and-socket conduit joint with an anchor structure.

### Background of the Invention

A spigot-and-socket conduit joint with an anchor structure has the advantages of simple structure, easy installation, and it has been widely used in the fields of municipal engineering, oil transferring, gas transferring and the like. The spigot-and-socket conduit joint with the anchor structure used as a stopper is popular to numerous users. Such joint typically includes a socket and a spigot. A ring is arranged within the spigot. After the spigot being inserted into the socket, a stopper is inserted into the socket to anchor the spigot within the socket. For example, CN102297297A discloses a spigot-and-socket conduit joint with an anchor structure. A mounting hole for a stopper is provided within the socket of the spigot-and-socket conduit joint, so that the stopper can be installed through the mounting hole for the stopper. The mounting hole for the stopper being provided in the socket makes the manufacturing process of the conduit complex, increasing the manufacture cost; furthermore, the mounting hole for the stopper may split the socket, causing the bearing strength of the socket decrease.

EP 2 090 815 A2 discloses multimaterial joint with locking grippers including front and back locking parts. The locking parts are ring-shaped.

### Summary of the Invention

An object of the present invention is to provide a spigot-and-socket conduit joint with simplified manufacturing process, decreased manufacturing cost and improved bearing strength.

To this end, the present invention is provided with a technical solution of a spigot-and-socket conduit joint, which comprises a socket whose end radially inwardly extends to form an annual wall, and a spigot whose outer wall near the end is provided with a collar of the spigot. A stopper is provided between the socket and the spigot, and comprises a number of front stoppers and rear stoppers. The front end of the front stopper is a front abutment end, and the rear end is a front contact end projecting from front to rear. A first and second front contact surfaces provided on the front contact end are symmetrical to each other. The rear end of the rear stopper is a rear abutment end, and the front end is a rear contact end projecting from rear to front. A first and second rear contact surfaces provided on the rear contact end are symmetrical with each other. The first front contact surface is parallel to the second rear contact surface, and the second front contact surface is parallel to the first rear contact surface. A number of front stoppers and rear stoppers are alternatively arranged to form a ring. The front abutment ends of several front stoppers are against the annular wall of the socket, and the rear abutment ends of several rear stoppers are against the collar of the spigot. The first and the second front contact surfaces of each front stopper are closely contacted with the second and the first rear contact surface of an adjacent rear stopper, respectively.

According to the present invention, the first front contact surface, the second rear contact surface, the second front contact surface and the first rear contact surface are bevels, and the angle θ between each bevel and the cross section of the cast tube is 9° to 60°.

According to the present invention, the first and the second front contact surfaces are provided with a first and a second boss, respectively. The first and the second rear contact surfaces are provided with a first and a second ridge, respectively. And the first ridge is stuck in the second boss, and the second ridge is stuck in the first boss.

According to the present invention, a transition arc is arranged between the front abutment end of the front stopper and the outer surface thereof. A transition bevel is arranged between the front abutment surface of the front stopper and the inner surface thereof. And the angle α between the transition bevel and the cross section of the cast tube is 20° to 70°.

According to the present invention, the rear stopper is provided with a first and a second transition bevels which are inclined from the rear abutment end to the inner end face.

According to the present invention, the angle β between the planes of the first and the second front contact surface and the plane of the front abutment end is 20° to 60°. The angle ω between the planes of the first and the second rear contact surface and the plane of the rear abutment end is 20° to 60°.

According to the present invention, one supporting ring of the stopper is provided between each rear stopper and the inner wall of the socket, respectively. The supporting ring of the stopper is made of elastic material. A fixing hole is provided within the rear abutment end of the rear stopper. A fixing boss is provided on the front end face of the supporting ring of the stopper. The fixing boss of each supporting ring of the stopper is provided within one respective fixing hole of the rear stopper, respectively. Several supporting rings of the stoppers form a closed loop whose outer diameter is larger than the inner diameter of the socket.

According to the present invention, the outer diameter of the closed loop is 1.03 times of the inner diameter of the socket.

According to the present invention, the upper and the lower surfaces of the fixing boss are all bevels which are inclined from rear to front. The angle α' between the bevel and the axis of the cast tube is 3°.

According to the present invention, in the circumference of the cast tube, two connecting grooves are provided in one end of each supporting ring of the stopper around the circumference of the cast tube, and two connecting bumps are provided in the other end of each supporting ring of the stopper. And two connecting bumps of one supporting ring of the stopper are provided within two connecting grooves of the supporting ring of the adjacent stopper, respectively.

According to the present invention, several protrusions are provided on the rear end face of the supporting ring of the stopper at intervals.

According to the present invention, on the front end face of the supporting ring of the stopper is provided a groove, which is extending in the length of the supporting ring of the stopper and located above the fixing boss.

According to the present invention, one annular supporting ring of the stopper is provided between the rear stopper and the inner wall of the socket. The annular supporting ring of the stopper is made of elastic material. A fixing hole is provided within the rear abutment end of the rear stopper. Several fixing bosses are provided on the front end face of the supporting ring of the annular stopper at intervals. Each fixing boss is provided within one respective fixing hole of the rear stopper. The outer diameter of the supporting ring of the stopper is larger than or equal to the inner diameter of the socket.

According to the present invention, the outer diameter of the annular supporting ring of the stopper is 1.03 times of the inner diameter of the socket.

In this way, as a result of the front and the rear stopper being provided in the socket, the front and the rear stoppers are contacted with each other, and are able to move along the contact surface relative to each other without providing the fixing hole within the socket, which can simplify the manufacturing process, reduce the manufacturing cost and improve the bearing strength of the socket.

Furthermore, since the first front contact surface, the second rear contact surface, the second front contact surface and the first rear contact surface are all bevels that are parallel to each other, thus, during the process of inserting the spigot into the socket, the force applied to the rear stopper by the collar of the spigot generates a component force pushing the front stopper against the annular wall of the socket, making the front stopper closely contact with the socket. The first and the second transition bevels in the rear stopper allow the collar of the spigot to pass easily. The first ridge is stuck in the second boss and the second ridge is stuck in the first boss, so that the connection of the conduit joint becomes more stable.

A transition arc is provided between the front abutment end of the front stopper and the outer surface thereof, preventing the damage to the conduit due to the stress concentration. A bevel is provided between the front abutment end of the front stopper and the inner surface thereof, facilitating the insertion of the spigot.

The angle β between the planes of the first and the second front contact surfaces of the front stopper and the plane of the front abutment end is 20° to 60° and the angle ω between the planes of the first and the second rear contact surfaces of the rear stopper and the plane of the rear abutment end is 20° to 60° , so that the stopper is able to move and adequately adapt to the change of the space when the joint is deflected, allowing every stopper to stay in the working stage.

In addition, a supporting ring of the stopper is provided inside the socket, allowing the front and the rear stopper to be fixed in the socket prior to the spigot being inserted into the socket, so that the rear stopper is closely contacted with the outer wall of the spigot via the supporting ring of the stopper.

The upper and the lower surfaces of the fixing boss on the supporting ring of the stopper are all bevels, making the fixing boss deform more easily. Several protrusions are provided on the rear end face of the supporting ring of the stopper at intervals, so that the whole supporting ring of the stopper deforms more easily and allows the collar of the spigot to pass easily. One end of each supporting ring of the stopper is provided with two connecting grooves, the other end is provided with two connecting bumps. And the two connecting bumps of one supporting ring of the stopper are provided within two connecting grooves of the supporting ring of the adjacent stopper, respectively, so that the connection of the conduit joint becomes more stable.

### Brief Description of the Drawings

Fig.1 is a left view of a spigot-and-socket conduit joint according to the present invention;
Fig.2 is a sectional view taken along the line B-B of Fig.1;
Fig.3 is a partial enlarged view of area C of Fig.2;
Fig.4 is an arrangement of the stopper within the spigot-and-pocket conduit joint according to the present invention;
Fig.5 is a sectional view taken along the line A-A of Fig.4;
Fig.6 is a partial enlarged view of area B of Fig.5;
Fig.7a is a stereogram of the front stopper of the spigot-and-pocket conduit joint according to the present invention;
Fig.7b is a top view of the front stopper of the spigot-and-pocket conduit joint according to the present invention;
Fig.7c is a sectional view taken along the line A-A of Fig.7b;
Fig.8a is a stereogram of the rear stopper of the spigot-and-socket conduit joint according to the present invention;
Fig.8b is a top view of the rear stopper of the spigot-and-pocket conduit joint according to the present invention;
Fig.8c is a sectional view taken along the line A-A of Fig.8b;
Fig.9a is a stereogram of the supporting ring of the stopper of the spigot-and-pocket conduit joint according to the present invention;
Fig.9b is a top view of the supporting ring of the stopper of the spigot-and-pocket conduit joint according to the present invention;
Fig.9c is a sectional view taken along the line A-A of Fig.9b.

The spigot-and-socket conduit joint according to the present invention will be described in conjunction with the accompanying drawings.

### Description of the Embodiments

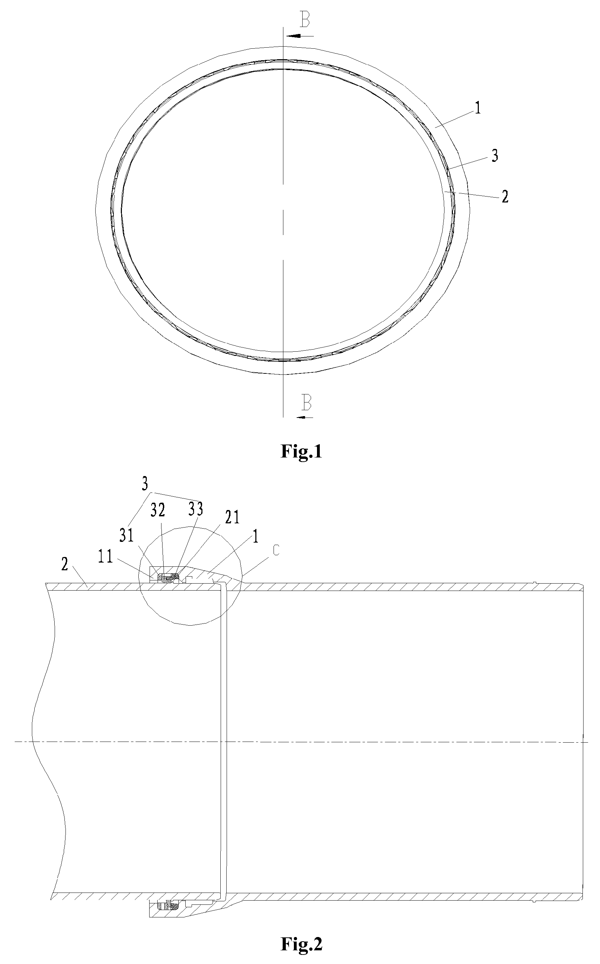

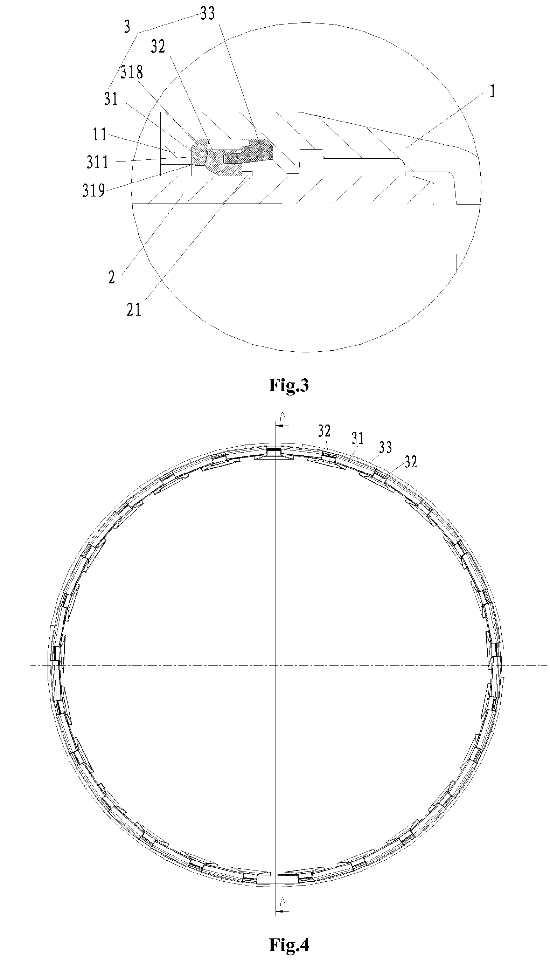

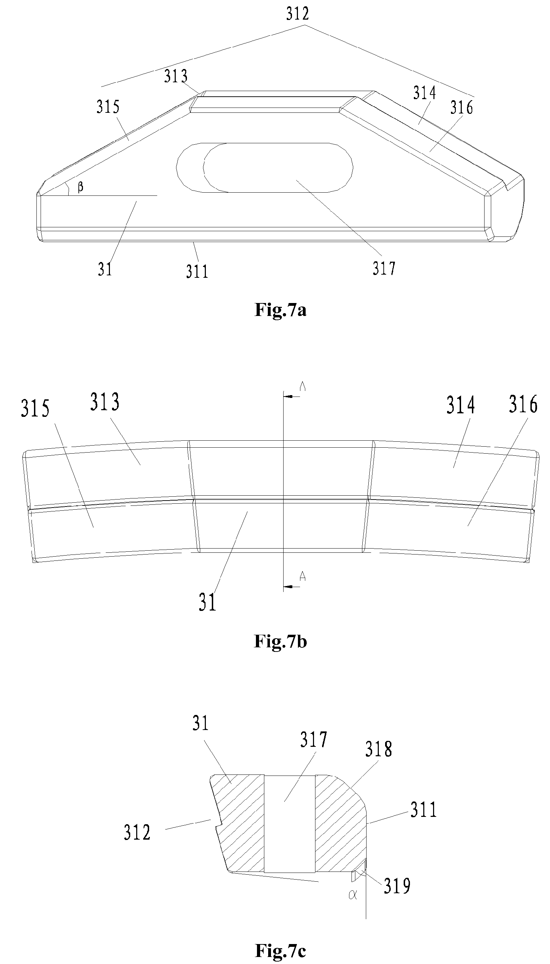

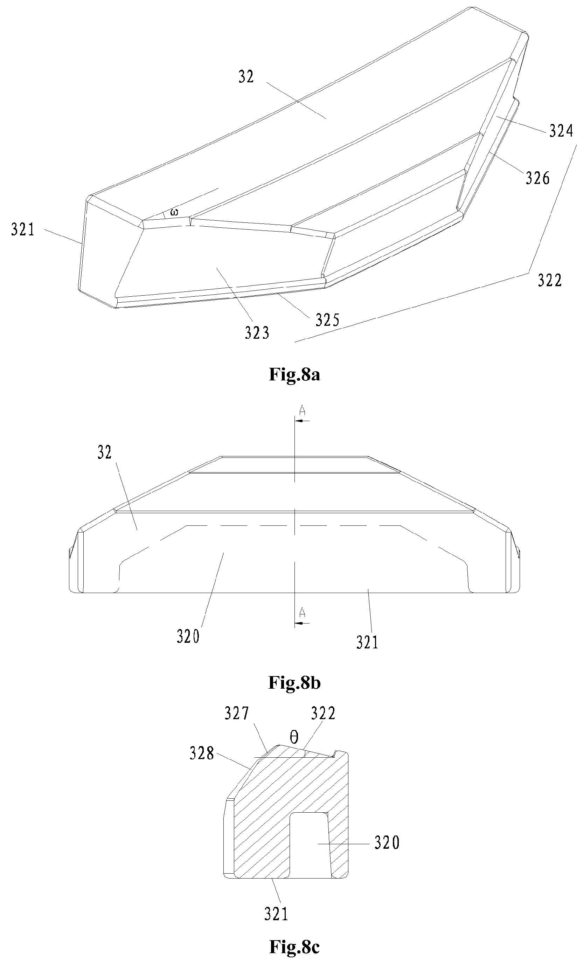

As shown in Figs.1, 2 and 3, a spigot-and-socket conduit joint comprises a socket 1 and a spigot 2. The end of the socket 1 radially inwardly extends to form an annual wall 11. A collar 21 of the spigot is provided in the outer wall of the spigot near the end of the spigot 2. A stopper 3 is provided between the socket 1 and the spigot 2, and the stopper 3 includes a front stopper 31 and a rear stopper 32. As shown in Figs.7a and 7b, the front end of the front stopper 31 is a front abutment end 311, and the rear end is a front contact end 312 projecting from front to rear. The front contact end 312 is provided with a first and a second front contact surface 313, 314 which are symmetrical with each other. A through hole 317 is arranged within the middle of the front stopper 31. As shown in Fig.8a, the rear end of the rear stopper 32 is a rear abutment end 321, and the front end is a rear abutment end 322 projecting from rear to front. The rear contact end 322 is provided with a first and a second rear contact surfaces 323, 324 which are symmetrical with each other. The first front contact surface 313 is parallel to the second rear contact surface 324, and the second front contact surface 314 is parallel to the first rear contact surface 323. As shown in Figs.4, 5 and 6, a number of front and rear stoppers 31, 32 are alternatively arranged into a ring. The front abutment ends 311 of several front stoppers 31 are against the annular wall 11 of the socket 1, and the rear abutment ends 321 of several rear stoppers 32 are against the collar 21 of the spigot 2. The first and the second front contact surfaces 313, 314 of each front stopper 31 are closely contacted with the second and the first rear contact surfaces 324, 323 of an adjacent rear stopper 32, respectively. As shown in Figs.3, 6 and 7, a transition arc 318 is arranged between the front abutment end 311 of the front stopper 31 and the out surface thereof. A transition bevel 319 is provided between the front abutment end 311 of the front stopper 31 and the inner surface thereof. The angle α between the transition bevel 319 and the cross section of the cast tube is 20° to 70° . As shown in Figs.7a and 8a, the angle β between the planes of the first and the second front contact surfaces 313, 314 and the plane of the front abutment end 311 is 20° to 60°. The angle ω between the planes of the first and the second rear contact surfaces 323, 324 and the plane of the rear abutment end 321 is 20° to 60°.

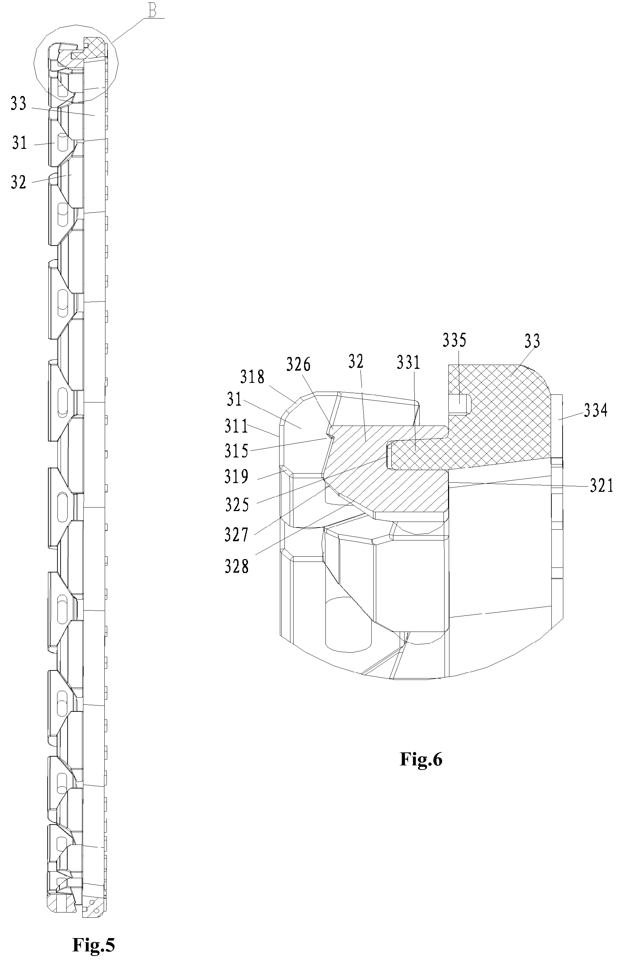

As shown in Figs.7a, 8a and 8c, the first front contact surface 313, the second rear contact surface 324, the second front contact surface 314 and the first rear contact surface 323 are bevels which are parallel to each other, and the angle θ between each bevel and the cross section of the cast tube is 9° to 60°. The first and the second front contact surfaces 313, 314 are provided with a first and a second boss 315, 316, respectively. The first and the second rear contact surfaces 323, 324 are provided with a first and a second ridge 325, 326, respectively. The first ridge 325 is stuck in the second boss 316, as shown in Fig.6, and the second ridge 326 is stuck in the first boss 315.

As shown in Figs.6, 8b and 8c, the rear stopper 32 is provided with a first and a second transition bevel 327, 328 which are inclined from the rear abutment end 322 to the inner end face.

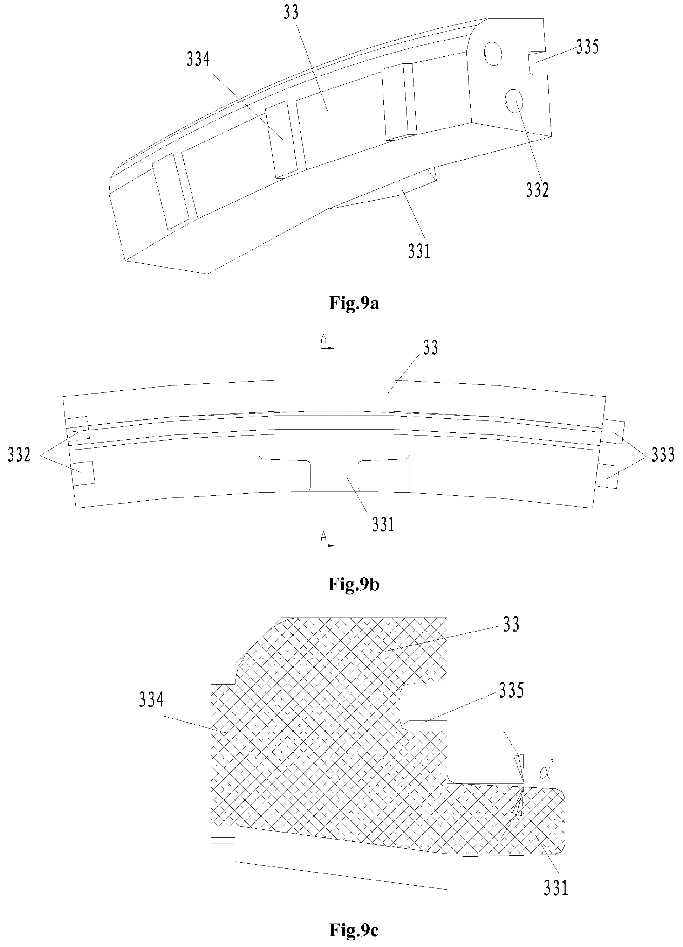

As shown in Figs.2, 4, 5 and 6, one supporting ring 33 of the stopper is respectively provided between each rear stopper 32 and the inner wall of the socket 1. The supporting ring 33 of the stopper is made of rubber or other elastic material. A fixing hole 320 is provided within the rear abutment end 321 of the rear stopper 32. As shown in Figs.9a, 9b and 9c, a fixing boss 311 is provided on the front end face of the supporting ring 33 of the stopper. The fixing boss 311 of each supporting ring 33 of the stopper is respectively provided within one respective fixing hole 320 of the rear stopper 32. Several supporting rings 33 of the stopper whose outer diameter is larger than the inner diameter of the socket 1 form a closed loop. The outer diameter of the closed loop is 1.03 times of the inner diameter of the socket 1.

As shown in Fig.9c, the upper and the lower surfaces of the fixing boss 331 are bevels which are inclined from rear to front. The angle α' between the bevel and the axis of the cast tube is 3°. As shown in Fig.9b, one end of each supporting ring 33 of the stopper is provided with two connecting grooves 332 around the circumference of the cast tube, and the other end is provide with two connecting bumps 333. And two connecting bumps of one supporting ring of the stopper are provided within two connecting grooves of the supporting ring of the adjacent stopper, respectively. As shown in Figs. 9a and 9c, several protrusions 334 are provided on the rear end face of the supporting ring 33 of the stopper at intervals. On the front end face of the supporting ring 33 of the stopper is provided a groove 335 which is extending in the length of the supporting ring 33 of the stopper and located above the fixing boss 331.

As described above, several supporting rings 33 of the stopper formed into a ring can be replaced by one annular supporting ring of the stopper. The annular supporting ring of the stopper is made of elastic material. Several fixing bosses are provided on the front end face of the supporting ring of the annular stopper at intervals. Each fixing boss is respectively provided within the respective fixing hole 320 of one rear stopper 32. The outer diameter of the annular supporting ring of the stopper is larger than or equal to the inner diameter of the socket 1. The outer diameter of the annular supporting ring of the stopper is 1.03 times of the inner diameter of the socket 1.

During installation, the front and rear stoppers 31, 32 and the supporting ring 33 of the stopper are firstly placed into the socket 1 of a conduit, and then the spigot 2 of another conduit is placed into the socket 1 of the conduit. Once the collar 21 of the spigot 2 contacts the rear stopper 32, during the insertion, the collar 21 of the spigot 2 pushes the rear stopper 32 to upwardly move relative to the front stopper 31 on the contact surface, allowing the collar 21 of the spigot to pass through. During the movement, since the first front contact surface 313, the second rear contact surface 324, the second front contact surface 314 and the first rear contact surface 323 are all bevels which are parallel to each other, the force applied to the rear stopper 32 by the collar 21 of the spigot generates a component force pushing the front stopper 31 against the annular wall 11 of the socket 1. The first and the second transition bevels 327, 328 on the rear stopper 32 allow the collar 21 of the spigot to pass easily. The rear stopper 32 causes the fixing boss 331 of the supporting ring 33 of the stopper to deform, and pushes the supporting ring 33 of the stopper against the inner wall of the socket 1. The upper and the lower surfaces of the fixing boss 331 are all bevels, so that the fixing boss 331 deforms more easily. Several protrusions 334 are provided on the rear end face of the supporting ring 33 of the stopper at intervals, so that the whole supporting ring 33 of the stopper may deform more easily and the collar 21 of the spigot may pass through easily. After the collar 21 of the spigot passing through the rear stopper 32, by means of the supporting ring 33 of the stopper, the rear stopper 32 falls and contacts the outer wall of the spigot 2 and the collar 21 of the spigot. The first ridge 325 is stuck in the second boss 316, and the second ridge 326 is stuck in the first boss 315, so that the connection of the conduit joint becomes more stable.

The embodiments described above are only the best embodiments of the present invention, and should not be considered to limit the scope of the present invention. Various changes and modifications within the skill of the art will fall in the scope of the invention as defined by appended claims without departing the spirit and scope of the present invention.

### Practical Applicability

The spigot-and-socket conduit joint has been widely used in the fields of municipal engineering, oil transferring, gas transferring and the like. It is not required to provide a fixing hole within the socket, simplifying the manufacturing process, reducing the manufacturing cost and improving the bearing strength of the socket and having better practical applicability.

## Claims

1. A spigot-and-socket conduit joint, comprises a socket (1) whose end radially inwardly extends to form an annual wall (11), a spigot (2) whose outer wall near the end is provided with a collar (21) of the spigot, and a stopper (3) provided between the socket (1) and the spigot (2),: the stopper (3) includes a front stopper (31) and a rear stopper (32), **characterized in that**
the front end of the front stopper (31) is a front abutment end (311), the rear end is a front contact end (312) projecting from front to rear, a first and a second front contact surfaces (313, 314) provided in the front contact end (312) are symmetrical with each other, the rear end of the rear stopper (32) is a rear abutment end (321) and the front end is a rear abutment end (322) projecting from rear to front, a first and a second rear contact surfaces (323, 324) provided in the rear abutment end (322) are symmetrical with each other, the first front contact surface (313) is parallel to the second rear contact surface (324), and the second front contact surface (314) is parallel to the first rear contact surface (323),a number of front and rear stoppers (31, 32) are alternatively arranged into a ring, the front abutment ends (311) of several front stoppers (31) are against the annular wall (11) of the socket (1), and the rear abutment ends (321) of several rear stoppers (32) are against the collar (21) of the spigot (2), the first and the second front contact surfaces (313, 314) of each front stopper (31) are closely contacted with the second and the first rear contact surfaces (324, 323) of adjacent rear stopper (32), respectively.

2. The spigot-and-socket conduit joint of claim 1, wherein, the first front contact surface (313), the second rear contact surface (324), the second front contact surface (314) and the first rear contact surface (323) are bevels which are parallel to each other, and the angle θ between each bevel and the cross section of the cast tube is 9° to 60° .

3. The spigot-and-socket conduit joint of claim 2, wherein, the first and the second front contact surfaces (313, 314) are provided with a first and a second boss (315, 316), respectively, the first and the second rear contact surfaces (323, 324) are provided with a first and a second ridge (325, 326), respectively, the first ridge (325) is stuck in the second boss (316), and the second ridge (326) is stuck in the first boss (315).

4. The spigot-and-socket conduit joint of claim 3, wherein, a transition arc (318) is provided between the front abutment end (311) of the front stopper (31) and the out surface thereof, a transition bevel (319) is provided between the front abutment end (311) of the front stopper (31) and the inner surface thereof, and the angle α between the transition bevel (319) and the cross section of the cast tube is 20° to 70°.

5. The spigot-and-socket conduit joint of claim 4, wherein, the rear stopper (32) is provided with a first and a second transition bevel (327, 328) which is inclined from the rear abutment end (322) to the inner end face.

6. The spigot-and-socket conduit joint of claim 5, wherein, the angle β between the planes of the first and the second front contact surfaces (313, 314) and the plane of the front abutment end (311) is 20° to 60° and the angle ω between the planes of the first and the second rear contact surfaces (323, 324) and the plane of the rear abutment end (321) is 20° to 60°.

7. The spigot-and-socket conduit joint of claim 6, wherein, one supporting ring (33) of the stopper is respectively provided between each rear stopper (32) and the inner wall of the socket (1), the supporting ring (33) of the stopper is made of elastic material, a fixing hole (320) is provided within the rear abutment end (321) of the rear stopper (32), a fixing boss (311) is provided on the front end face of the supporting ring (33) of the stopper, the fixing boss (311) of each supporting ring (33) of the stopper is respectively provided within one respective fixing hole (320) of the rear stopper (32), and several supporting ring (33) of the stoppers whose outer diameter is larger than the inner diameter of the socket (1) form a closed loop.

8. The spigot-and-socket conduit joint of claim 7, wherein, the outer diameter of the closed loop is 1.03 times of the inner diameter of the socket (1).

9. The spigot-and-socket conduit joint of claim 8, wherein, the upper and the lower surface of the fixing boss (331) are bevels which are inclined from rear to front, and the angle α' between the bevel and the axis of the cast tube is 3°.

10. The spigot-and-socket conduit joint of claim 9, wherein, , one end of each supporting ring (33) of the stopper is provided with two connecting grooves (332) around the circumference of the cast tube, and the other end is provide with two connecting bumps (333), two connecting bumps of one supporting ring of the stopper are provided within two connecting grooves of the supporting ring of the adjacent stopper, respectively.

11. The spigot-and-socket conduit joint of claim 10, wherein, several protrusions (334) are provided on the rear end face of the supporting ring (33) of the stopper at intervals.

12. The spigot-and-socket conduit joint of claim 11, wherein, on the front end face of the supporting ring (33) of the stopper is provided a groove (335) which is extending in the length of the supporting ring (33) of the stopper and located above the fixing boss (331).

13. The spigot-and-socket conduit joint of claim 7, wherein, one annular supporting ring is provided between the rear stopper (32) and the inner wall of the socket (1), the annular supporting ring of the stopper is made of elastic material, a fixing hole (320)is provided within the rear abutment end (321) of the rear stopper (32), several fixing bosses are provided on the front end face of the supporting ring of the annular stopper at intervals, each fixing boss is respectively provided within the fixing hole (320) of one rear stopper (32), the outer diameter of the annular supporting ring of the stopper is larger than or equal to the inner diameter of the socket (1).

14. The spigot-and-socket conduit joint of claim 13, wherein, the outer diameter of the annular supporting ring of the stopper is 1.03 times of the inner diameter of the socket (1).

## Patentansprüche

1. Steckzapfen-Rohrverbindung, die eine Muffe (1), deren Ende sich radial nach innen erstreckt, um eine ringförmige Wand (11) auszubilden, einen Zapfen (2), dessen Außenwand nahe dem Ende mit einem Kragen (21) des Zapfens bereitgestellt wird, und einen Anschlag (3), der zwischen der Muffe (1) und dem Zapfen (2) bereitgestellt wird, aufweist; wobei der Anschlag (3) einen vorderen Anschlag (31) und einen hinteren Anschlag (32) aufweist,
**dadurch gekennzeichnet, dass**
das vordere Ende des vorderen Anschlags (31) ein vorderes Anschlagsende (311) ist, das hintere Ende ein vorderes Kontaktende (312), das von vorne nach hinten vorsteht, ist, eine erste und eine zweite vordere Kontaktfläche (313, 314), die im vorderen Kontaktende (312) bereitgestellt werden, symmetrisch zueinander sind, das hintere Ende des hinteren Anschlags (32) ein hinteres Anschlagsende (321) ist und das vordere Ende ein hinteres Anschlagsende (322), das von hinten nach vorne vorsteht, ist, eine erste und eine zweite hintere Kontaktfläche (323, 324), die im hinteren Anschlagsende (322) bereitgestellt werden, symmetrisch zueinander sind, die erste vordere Kontaktfläche (313) parallel zur zweiten hinteren Kontaktfläche (324) ist, und die zweite vordere Kontaktfläche (314) parallel zur ersten hinteren Kontaktfläche (323) ist, eine Anzahl vorderer und hinterer Anschläge (31, 32) alternierend angeordnet sind, um einen Ring zu bilden, die vorderen Anschlagsenden (311) mehrerer vorderer Anschläge (31) an der ringförmigen Wand (11) der Muffe (1) anliegen und die hinteren Anschlagsenden (321) mehrerer hinterer Anschläge (32) am Kragen (21) des Zapfens (2) anliegen, die erste und die zweite vordere Kontaktfläche (313, 314) jedes vorderen Anschlags (31) jeweils eng mit der zweiten und der ersten hinteren Kontaktfläche (324, 323) eines benachbarten hinteren Anschlags (32) in Kontakt stehen.

2. Steckzapfen-Rohmerbindung nach Anspruch 1, wobei die erste vordere Kontaktfläche (313), die zweite hintere Kontaktfläche (324), die zweite vordere Kontaktfläche (314) und die erste hintere Kontaktfläche (323) Abschrägungen sind, die parallel zueinander sind, und wobei der Winkel θ zwischen jeder Abschrägung und dem Querschnitt des Gussrohrs 9° bis 60° beträgt.

3. Steckzapfen-Rohmerbindung nach Anspruch 2, wobei die erste und die zweite vordere Kontaktfläche (313, 314) jeweils mit einem ersten und einem zweiten Buckel (315, 316) bereitgestellt werden, die erste und die zweite hintere Kontaktfläche (323, 324) jeweils mit einem ersten und einem zweiten Kamm (325, 326) bereitgestellt werden, wobei der erste Kamm (325) im zweiten Buckel (316) feststeckt und der zweite Kamm (326) im ersten Buckel (315) feststeckt.

4. Steckzapfen-Rohmerbindung nach Anspruch 3, wobei ein Übergangsbogen (318) zwischen dem vorderen Anschlagsende (311) des vorderen Anschlags (31) und der Außenfläche davon bereitgestellt wird, eine Übergangabschrägung (319) zwischen dem vorderen Anschlagsende (311) des vorderen Anschlags (31) und der Innenfläche davon bereitgestellt wird, und der Winkel α zwischen der Übergangsabschrägung (319) und dem Querschnitt des Gussrohrs 20° bis 70° beträgt.

5. Steckzapfen-Rohmerbindung nach Anspruch 4, wobei der hintere Anschlag (32) mit einer ersten und einer zweiten Übergangsabschrägung (327, 328), die vom hinteren Anschlagsende (322) zur inneren Endfläche geneigt sind, bereitgestellt wird.

6. Steckzapfen-Rohmerbindung nach Anspruch 5, wobei der Winkel β zwischen den Ebenen der ersten und der zweiten vorderen Kontaktfläche (313, 314) und der Ebene des vorderen Anschlagsendes (311) 20° bis 60° beträgt und der Winkel ω zwischen den Ebenen der ersten und der zweiten hinteren Kontaktfläche (323, 324) und der Ebene des hinteren Anschlagsendes (321) 20° bis 60° beträgt.

7. Steckzapfen-Rohmerbindung nach Anspruch 6, wobei ein Stützring (33) des Anschlags jeweils zwischen jedem hinteren Anschlag (32) und der Innenwand der Muffe (1) bereitgestellt wird, wobei der Stützring (33) des Anschlags aus elastischem Material besteht, wobei ein Befestigungsloch (320) im hinteren Anschlagsende (321) des hinteren Anschlags (32) bereitgestellt wird, wobei ein Befestigungsbuckel (311) auf der vorderen Endfläche des Stützrings (33) des Anschlags bereitgestellt wird, wobei der Befestigungsbuckel (311) jedes Stützrings (33) des Anschlags jeweils mit einem jeweiligen Befestigungsloch (320) des hinteren Anschlags (32) bereitgestellt wird, und wobei mehrere Stützringe (33) der Anschläge, deren Außendurchmesser größer als der Innendurchmesser der Muffe (1) sind, einen geschlossenen Kreis ausbilden.

8. Steckzapfen-Rohmerbindung nach Anspruch 7, wobei der Außendurchmesser des geschlossenen Kreises 1,03 mal der Innendurchmesser der Muffe (1) ist.

9. Steckzapfen-Rohmerbindung nach Anspruch 8, wobei die obere und die untere Fläche des Befestigungsbuckels (331) Abschrägungen sind, die von hinten nach vorne geneigt sind und wobei der Winkel α' zwischen der Abschrägung und der Achse des Gussrohrs 3° ist.

10. Steckzapfen-Rohmerbindung nach Anspruch 9, wobei ein Ende jedes Stützrings (33) des Anschlags mit zwei Verbindungsnuten (332) um den Umfang des Gussrohrs herum bereitgestellt wird und das andere Ende mit zwei Verbindungshöckern (333) bereitgestellt wird, wobei zwei Verbindungshöcker eines Stützrings des Anschlags jeweils mit zwei Verbindungsnuten des Stützrings des benachbarten Anschlags bereitgestellt werden.

11. Steckzapfen-Rohmerbindung nach Anspruch 10, wobei mehrere Vorsprünge (334) auf der hinteren Endfläche des Stützrings (33) des Anschlags in Abständen bereitgestellt werden.

12. Steckzapfen-Rohmerbindung nach Anspruch 11, wobei auf der vorderen Endfläche des Stützrings (33) des Anschlags eine Nut (335), die sich in der Länge des Stützrings (33) des Anschlags erstreckt und sich über dem Befestigungsbuckel (331) befindet, bereitgestellt wird.

13. Steckzapfen-Rohmerbindung nach Anspruch 7, wobei ein ringförmiger Stützring zwischen dem hinteren Anschlag (32) und der Innenwand der Muffe (1) bereitgestellt wird, wobei der ringförmige Stützring des Anschlags aus elastischem Material besteht, wobei ein Befestigungsloch (320) im hinteren Anschlagsende (321) des hinteren Anschlags (32) bereitgestellt wird, wobei mehrere Befestigungsbuckel auf der vorderen Endfläche des Stützrings des ringförmigen Anschlags in Abständen bereitgestellt werden, wobei jeder Befestigungshöcker jeweils im Befestigungsloch (320) eines hinteren Anschlags (32) bereitgestellt wird, wobei der Außendurchmesser des ringförmigen Stützrings des Anschlags größer als der oder gleich dem Innendurchmesser der Muffe (1) ist.

14. Steckzapfen-Rohrverbindung nach Anspruch 13, wobei der Außendurchmesser des ringförmigen Stützrings des Anschlags 1,03 mal der Innendurchmesser der Muffe (1) ist.

## Revendications

1. Joint de canalisation du type à emboîtement, comprenant un emboîtement (1) l'extrémité duquel s'étend radialement vers l'intérieur pour former une paroi (11) annulaire, un bout (2) mâle la paroi extérieure duquel est pourvue d'une manchette (21) du bout mâle près de l'extrémité, et un organe (3) d'arrêt prévu entre l'emboîtement (1) et le bout (2) mâle) ; l'organe (3) d'arrêt comprenant un organe (31) d'arrêt avant et un organe (32) d'arrêt arrière,
**caractérisé en ce que**
l'extrémité avant de l'organe (31) d'arrêt avant est une extrémité (311) de butée avant, l'extrémité arrière est une extrémité (312) de contact avant faisant saillie de l'avant vers l'arrière, une première et une seconde surfaces (313, 314) de contact avant prévues dans l'extrémité (312) de contact avant sont symétriques l'une par rapport à l'autre, l'extrémité arrière de l'organe (32) d'arrêt arrière est une extrémité (321) de butée arrière et l'extrémité avant est une extrémité (322) de butée arrière faisant saillie de l'arrière vers l'avant, une première et une seconde surfaces (323, 324) de contact arrière prévues dans l'extrémité (322) de butée arrière sont symétriques l'une par rapport à l'autre, la première surface (313) de contact avant est parallèle à la seconde surface (324) de contact arrière, et la seconde surface (314) de contact avant est parallèle à la première surface (323) de contact arrière, un nombre d'organes (31, 32) d'arrêt avant et arrière est disposé de manière alternée de façon à former un anneau, les extrémité (311) de butée avant de plusieurs organes (31) d'arrêt sont plaquées contre la paroi (11) annulaire de l'emboîtement (1), et les extrémités (321) de butée arrière de plusieurs organes (32) d'arrêt arrière sont plaquées contre la manchette (21) du bout (2) mâle, la première et la seconde surfaces (313, 314) de contact avant de chaque organe (31) d'arrêt avant sont en contact étroit avec la seconde et la première surfaces (324, 323) de contact arrière d'un organe (32) d'arrêt adjacent, respectivement.

2. Joint de canalisation du type à emboîtement selon la revendication 1, dans lequel la première surface (313) de contact avant, la seconde surface (324) de contact arrière, la seconde surface (314) de contact avant et la première surface (323) de contact arrière sont des biseaux qui sont parallèles entre eux, et l'angle θ entre chaque biseau et la coupe transversale du tuyau en fonte étant compris entre 9° et 60°.

3. Joint de canalisation du type à emboîtement selon la revendication 2, dans lequel la première et la seconde surfaces (313, 314) de contact avant sont pourvues d'une première et une seconde bosses (315, 316), respectivement, la première et la seconde surfaces (323, 324) de contact arrière étant pourvues d'une première et une seconde arêtes (325, 326), respectivement, la première arête (325) étant bloquée dans la seconde bosse (316), et la seconde arête (326) étant bloquée dans la première bosse (315).

4. Joint de canalisation du type à emboîtement selon la revendication 3, dans laquelle un arc (318) de transition est prévu entre l'extrémité (311) de butée avant de l'organe (31) d'arrêt avant et la surface extérieure de celui-ci, un biseau (319) de transition étant prévu entre l'extrémité (311) de butée avant de l'organe (31) d'arrêt avant et la surface intérieure de celui-ci, et l'angle α entre le biseau (319) de transition et la coupe transversale du tuyau en fonte étant compris entre 20° et 70°.

5. Joint de canalisation du type à emboîtement selon la revendication 4, dans lequel l'organe (32) d'arrêt arrière est pourvu d'un premier et un second biseaux (327, 328) de transition qui sont inclinés de l'extrémité (322) de butée arrière vers la face terminale intérieure.

6. Joint de canalisation du type à emboîtement selon la revendication 5, dans lequel l'angle β entre les plans des première et seconde surfaces (313, 314) de contact avant et le plan de l'extrémité (311) de butée avant est compris entre 20° et 60° et l'angle ω entre les plans des première et seconde surfaces (323, 324) de contact arrière et le plan de l'extrémité (321) de butée arrière est compris entre 20° et 60°.

7. Joint de canalisation du type à emboîtement selon la revendication 6, dans lequel un anneau (33) de support de l'organe d'arrêt est prévu entre chaque organe (32) d'arrêt arrière et la paroi intérieure de l'emboîtement (1), respectivement, l'anneau (33) de support de l'organe d'arrêt étant fabriqué en un matériau élastique, un trou (320) de fixation étant prévu entre l'extrémité (321) de butée arrière de l'organe (32) d'arrêt arrière, une bosse (311) de fixation étant prévue sur la face terminale avant de l'anneau (33) de support de l'organe d'arrêt; la bosse (311) de fixation de chaque anneau (33) de support de l'organe d'arrêt étant prévue dans un trou (320) de fixation respectif de l'organe (32) d'arrêt arrière, respectivement, et plusieurs anneaux (33) de support des organes d'arrêt le diamètre extérieur desquels est supérieur au diamètre intérieur de l'emboîtement (1) formant une boucle fermée.

8. Joint de canalisation du type à emboîtement selon la revendication 7, dans lequel le diamètre extérieur de la boucle fermée est 1,03 fois le diamètre intérieur de l'emboîtement (1).

9. Joint de canalisation du type à emboîtement selon la revendication 8, dans lequel les surfaces supérieure et inférieure de la bosse (331) de fixation sont des biseaux qui sont inclinés de l'arrière vers l'avant, et l'angle α' entre le biseau et l'axe du tuyau en fonte est de 3°.

10. Joint de canalisation du type à emboîtement selon la revendication 9, dans lequel une extrémité de chaque anneau (33) de support de l'organe d'arrêt est prévu de deux rainures (332) de liaison autour de la circonférence du tuyau en fonte, et l'autre extrémité étant pourvue de deux bosses (333) de liaison, deux bosses de liaison d'un anneau de support de l'organe d'arrêt étant prévues dans deux rainures de liaison de l'anneau de support de l'organe d'arrêt adjacent, respectivement.

11. Joint de canalisation du type à emboîtement selon la revendication 10, dans lequel plusieurs saillies (334) sont prévues sur la face terminale arrière de l'anneau (33) de support de l'organe d'arrêt à intervalles.

12. Joint de canalisation du type à emboîtement selon la revendication 11, dans lequel une rainure (335) qui s'étend dans la longueur de l'anneau (33) de support de l'organe d'arrêt et est située au-dessus de la bosse (331) de fixation est prévue sur la face terminale avant de l'anneau (33) de support de l'organe d'arrêt.

13. Joint de canalisation du type à emboîtement selon la revendication 7, dans lequel un anneau de support annulaire est prévu entre l'organe (32) d'arrêt arrière et la paroi intérieure de l'emboîtement (1), l'anneau de support annulaire étant fabriqué en un matériau élastique, un trou (320) de fixation étant prévu dans l'extrémité (321) de butée arrière de l'organe (32) d'arrêt arrière, plusieurs bosses de fixation étant prévues sur la face terminale avant de l'anneau de support de l'organe d'arrêt annulaire à intervalles, chaque bosse de fixation étant prévue dans le trou (320) de fixation d'un organe (32) d'arrêt arrière, respectivement, le diamètre extérieur de l'anneau de support annulaire de l'organe d'arrêt étant supérieur ou égal au diamètre intérieur de l'emboîtement (1).

14. Joint de canalisation du type à emboîtement selon la revendication 13, dans lequel le diamètre extérieur de l'anneau de support annulaire de l'organe d'arrêt est 1,03 fois le diamètre intérieur de l'emboîtement (1).
